# EUROPÄISCHE PATENTANMELDUNG

(11) **EP 2 333 873 A1**
(43) Veröffentlichungstag der Anmeldung: **15.06.2011**
(21) Anmeldenummer: 09015155.6
(22) Anmeldetag: 08.12.2009
(51) Int. Cl.: H01M 2/10, H01M 10/50

(54) **Belüftetes Batteriegehäuse**

(71) Anmelder: Goldberg, Stefan, 80687 München (DE)
(72) Erfinder: Goldberg, Stefan, 80687 München (DE)

(57) **Zusammenfassung**

Es wird ein belüfteter Batterietrog für Traktionsbatterien bereitgestellt. Die Belüftung der Batterie erfolgt über Lüftungsschlitze in den Stirnwänden und dem Boden des Batterietroges.

## Beschreibung

Die vorliegend Erfindung betrifft einen Behälter für den Einbau von Batteriezellen.

Traktionsbatterien stellen Energie für elektrisch betriebene Fahrzeuge zur Verfügung. Da die Leistung der Fahrzeuge immer weiter erhöht wird, werden auch an die Batterien immer höhere Anforderungen gestellt. Die Batterien müssen hohe Ströme aufnehmen und abgeben können und werden oft fast kontinuierlich im 2 oder 3 Schichtbetrieb genutzt Bei einer solch starken Auslastung erwärmen sich die Batterien deutlich. Die Erwärmung begrenzt die Leistungsfähigkeit der Batterie und kann einen negativen Einfluss auf die Batterielebensdauer haben. Die Batterien, die aktuell flächendeckend im Einsatz sind bestehen aus mehreren Zellen, die in einen geschlossenen Trog eingebaut sind, Durch die kompakte Bauweise nimmt die Abkühlung einer erwärmten Batterie viel Zeit in Anspruch.

Die Norm DIN 57510/VDE 0510 beschreibt einen Batterietrog als "Trog mit geschlossenen Wänden". ln den Normen DIN 43535, 43531 und 43536 ist der Aufbau von geschlossenen DIN-Trögen dargestellt.

Die vorliegende Erfindung stellt eine Möglichkeit dar, die Batteriezellen während des Einsatzes zu kühlen und somit die Auslastung der Batterie zu optimieren.

Gemäß der vorliegenden Erfindung werden die Stirnwände und der Boden des Batterietroges mit Lüftungsschlitzen versehen. Diese Schlitze erhöhen die Luftbewegung zwischen den Zellen, sodass die Wärme aus der Batterie transportiert werden kann. Durch konstruktive Vorkehrungen wird ein Austreten von Batteriesäure aus dem Batterietrog verhindert.

Die angehängte Zeichnung zeigt den prinzipiellen Aufbau eines geschlitzten Troges.

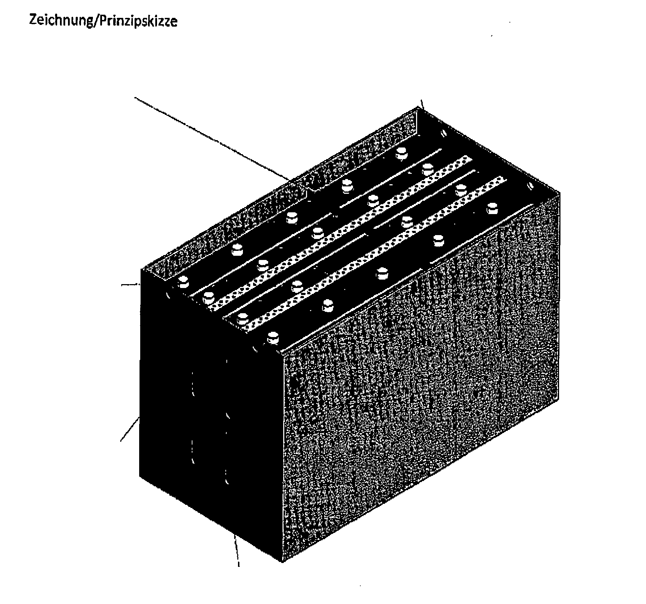

## Patentansprüche

1. Der Patentanspruch bezieht sich auf einen Behälter für den Einbau von Batteriezellen, Die Wände und der Boden des Behälters sind zur Belüftung und Kühlung der Zellen mit Schlitzen versehen.
